# EUROPÄISCHE PATENTSCHRIFT

(11) **EP 2 409 062 B1**
(45) Veröffentlichungstag und Bekanntmachung des Hinweises auf die Patenterteilung: **28.11.2012**
(21) Anmeldenummer: 10711176.7
(22) Anmeldetag: 08.03.2010
(51) Int. Cl.: F16K 31/56, F16K 47/02, F01D 17/14, F16K 1/44, F16K 3/26

(54) **PLATZSPARENDES REGEL-SCHNELLSCHLUSS-VENTIL FÜR EINE DAMPFTURBINE**
SPACE-SAVING QUICK ACTING CONTROL VALVE FOR A STEAM TURBINE
VANNE DE FERMETURE INSTANTANEE ET DE REGULATION COMPACTE POUR UNE TURBINE A VAPEUR

(30) Priorität: 16.03.2009 EP 09003788
(43) Veröffentlichungstag der Anmeldung: 25.01.2012
(73) Patentinhaber: Siemens Aktiengesellschaft, 80333 München (DE)
(72) Erfinder: BENNAUER, Martin, 46242 Bottrop (DE); FLOHR, Ningsih, 45478 Mülheim a.d. Ruhr (DE); NIENHAUS, Michael, 46325 Borken (DE); SCHINDLER, Christoph, 45219 Essen (DE); WELTERSBACH, Dirk, 44805 Bochum (DE)
(86) Internationale Anmeldenummer: PCT/EP2010/052878
(87) Internationale Veröffentlichungsnummer: WO 2010/105928

(56) Entgegenhaltungen:
- DE-A1- 1 916 876
- DE-A1-102007 027 464

## Beschreibung

Die Erfindung betrifft ein Regel-Schnellschluss-Ventil für eine Dampfturbine, wobei in dem Regel-Schnellschluss-Ventil ein Regelventil und ein Schnellschlussventil miteinander kombiniert sind. DE 1916 876 offenbart ein solches Regel-Schnellschluss-Ventil.

An einer Dampfturbine, die beispielsweise in einem Dampfkraftwerk eingesetzt ist, ist für den sicheren Betrieb der Dampfturbine frischdampfseitig eine Absperrung durch ein Schnellschlussventil und zur Regelung der Frischdampfzufuhr zu der Dampfturbine ein Regelventil vorgesehen. Das Regelventil und das Schnellschlussventil sind hintereinander jeweils in ein separates Ventilgehäuse eingebaut. Aus Sicherheitsgründen ist die Schnellschlussfähigkeit durch das Regelventil und das Schnellschlussventil redundant bereitgestellt. Das Regelventil und das Schnellschlussventil weisen jeweils eigene Tellerfedern auf, die im Störfall zum schnellen Schließen der Ventile führen. Herkömmlich sind das Schnellschlussventil und das Regelventil als in Reihe geschaltete Hubventile ausgeführt, wobei eines der Hubventile die Schnellschlussfunktion ausübt und mit dem anderen Hubventil die Frischdampfmassenstromregelung bewerkstelligt wird. Die Hubventile sind beispielsweise als Einsetzventile gebaut, die wegen ihrer guten Dichtheit und ihres geringen Druckverlusts vorteilhaft sind. Allerdings sind herkömmlich die Hubventile mit einem großen und schweren Gehäuse konstruiert, woraus ein hoher Materialeinsatz resultiert. Die Folge hiervon ist ein hoher Herstellungsaufwand bei hohen Kosten. Ferner haben die herkömmlichen Hubventile einen großen Platzbedarf, so dass die frischdampfseitige Verrohrung an dem Dampfturbinengehäuse entsprechend voluminös ausfällt.

Aufgabe der Erfindung ist es ein Regel-Schnellschluss-Ventil für eine Dampfturbine zu schaffen, wobei das Regel-Schnellschluss-Ventil eine kompakte und materialeinsparende sowie eine kostengünstige Konstruktion hat.

Das erfindungsgemäße Regel-Schnellschluss-Ventil für eine Dampfturbine weist ein Ventilgehäuse und einen Regelventilkegel, der in dem Ventilgehäuse entlang seiner Mittelachse verschiebbar angeordnet ist, wodurch der Regelventilkegel in eine Offenstellung, in der der Regelventilkegel mit seinem Regelventilkegelmantel von dem Ventilgehäuse abgehoben ist, und in eine Geschlossenstellung bringbar ist, in der der Regelventilkegel mit seinem Regelventilkegelmantel an dem Ventilgehäuse anliegt, sowie einen Schnellschlussventilkolben auf, der der dem Regelventilkegelmantel abgewandten Regelventilkegelrückseite zugewandt in dem Ventilgehäuse angeordnet ist und an seinem Außenumfangsrand an dem Ventilgehäuse stets dampfdicht anliegt sowie eine Durchlassöffnung aufweist, durch die Dampf von der dem Regelventilkegel abgewandten Seite des Schnellschlussventilkolbens zu der dem Regelventilkegel zugewandten Seite des Schnellschlussventilkolbens passierbar ist, wobei der Schnellschlussventilkolben in dem Ventilgehäuse parallel zur Mittelachse des Regelventilkegels verschiebbar angeordnet und dadurch an die Regelventilkegelrückseite anlegbar ist, wodurch die Durchlassöffnung für den Dampf unpassierbar ist.

Somit sind in dem erfindungsgemäßen Regel-Schnellschluss-Ventil ein Regelventil und ein Schnellschlussventil kombiniert in das einteilige Ventilgehäuse eingebaut, wobei das Regelventil mit dem Regelventilkegel und das Schnellschlussventil mit dem Schnellschlussventilkolben einen gemeinsamen Ventilsitz haben. Mit dem Regelventilkegel ist der Dampfmassenstrom am Ventilgehäuse absperrbar, während mit dem Schnellschlussventilkolben der Dampfmassenstrom am Regelventilkegel absperrbar ist. Dadurch, dass das Regelventil und das Schnellschlussventil in dem erfindungsgemäßen Regel-Schnellschluss-Ventil miteinander kombiniert sind, hat das Regel-Schnellschluss-Ventil eine platzsparende Anordnung. Damit ist das Volumen des Ventilgehäuses verglichen mit den herkömmlichen Ventilgehäusen für ein herkömmliches Regelventil und ein herkömmliches Schnellschlussventil reduziert, wodurch der Materialeinsatz und letztlich die Herstellungskosten für das erfindungsgemäße Regel-Schnellschluss-Ventil reduziert sind.

Das Ventilgehäuse weist bevorzugt eine Dampfeintrittsöffnung, die dem Schnellschlussventilkolben zugewandt angeordnet ist, und eine Dampfaustrittsöffnung auf, die dem Regelventilkegel zugewandt angeordnet ist. Bevorzugtermaßen weist das Ventilgehäuse einen konischen Gehäuseabschnitt, mit dem der Regelventilkegel mit seinem Regelventilkegelmantel einen Regelventilsitz bildet, und einen zylindrischen Gehäuseabschnitt auf, von dem der Schnellschlussventilkolben geführt ist. Dadurch ist an dem Regelventilkegelsitz der Massenstrom des Dampfs mit dem Regelventilkegel sowohl regelbar als auch im Schnellschluss versperrbar.

Bevorzugtermaßen weist der Schnellschlussventilkolben einen Kolbenring auf, der an dem zylindrischen Gehäuseabschnitt gleitbar anliegt. Dadurch ist der Schnellschlussventilkolben mit dem Kolbenring sicher und dicht an dem zylindrischen Gehäuseabschnitt geführt. Der Schnellschlussventilkolben weist ferner bevorzugt an seinem Außenrand einen der Regelventilkegelrückseite zugewandten, umlaufenden Vorsprung auf, mit dem der Schnellschlussventilkolben an die Regelventilkegelrückseite anlegbar ist, so dass die Durchlassöffnung für den Dampf unpassierbar ist. Somit ist durch das Anlegen des Schnellschlussventilkolbens an die Regelventilkegelrückseite mit seinem Vorsprung die Schnellschlussfunktion bewerkstelligbar, wenn gleichzeitig der Regelventilkegel mit seinem Regelventilkegelmantel an dem Regelventilsitz anliegt.

Es ist bevorzugt, dass die Mittelachse des Regelventilkegels und die Mittelachse des Schnellschlussventilkolbens zusammenfallen. Dadurch hat das erfindungsgemäße Regel-Schnellschluss-Ventil eine achssymmetrische Konstruktion, die platzsparend ist. Ferner weist der Regelventilkegel eine Regelventilspindel und der Schnellschlussventilkolben mindestens eine Schnellschlussventilspindel auf, wobei die Spindeln parallel zu den Mittelachsen längsverschiebbar sind. Die Regelventilspindel ist bevorzugt an der Regelventilkegelrückseite angebracht und durch den Schnellschlussventilkolben hindurchgeführt angeordnet.

Das Ventilgehäuse weist bevorzugt einen Gehäusewandabschnitt auf, der für die Regelventilspindel und für die Schnellschlussventilspindel jeweils ein Spindelführungsloch aufweist, durch das die entsprechende Spindel geführt ist. Dabei ist bevorzugt jede Spindel außerhalb des Gehäusewandabschnitts mit einem Tellerfederpaket zur Betätigung der jeweiligen Spindel versehen.

Im Folgenden wird eine bevorzugte Ausführungsform des erfindungsgemäßen Regel-Schnellschluss-Ventils anhand der beigefügten schematischen Zeichnungen erläutert. Es zeigen:
- Fig. 1: die erfindungsgemäße Ausführungsform des Regel-Schnellschluss-Ventils, wobei das Regelventil und das Schnellschlussventil geschlossen sind,
- Fig. 2: die in Fig. 1 gezeigte Ausführungsform, wobei das Regelventil geschlossen und das Schnellschlussventil geöffnet ist,
- Fig. 3: die in Fig. 1 gezeigte Ausführungsform, wobei sowohl das Regelventil als auch das Schnellschluss-ventil geöffnet sind, und
- Fig. 4: die in Fig. 1 gezeigte Ausführungsform, wobei das Regelventil geöffnet und das Schnellschlussventil geschlossen ist.

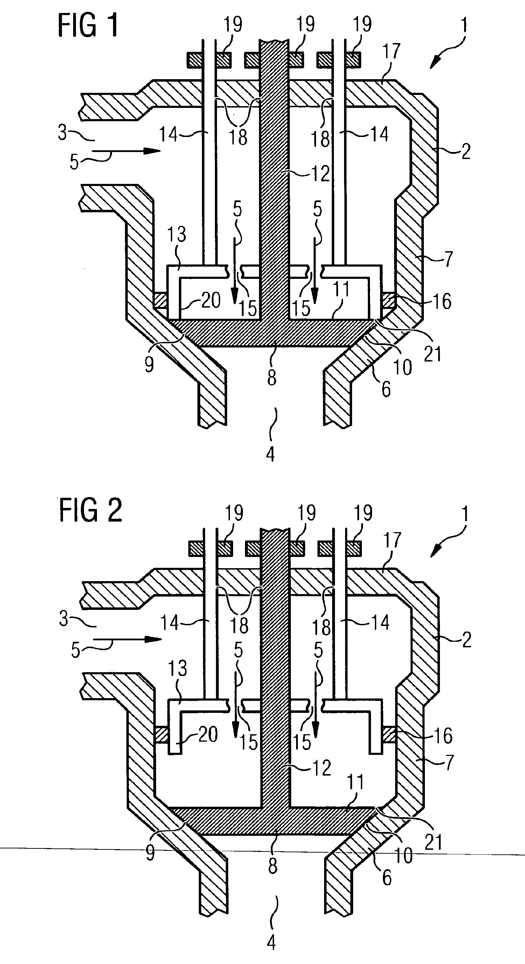

Wie es aus Fig. 1 bis 4 ersichtlich ist, weist ein Regel-Schnellschluss-Ventil 1 ein Ventilgehäuse 2 auf, in dem eine Dampfeintrittsöffnung 3 und eine Dampfaustrittsöffnung 4 vorgesehen sind. Das Regel-Schnellschluss-Ventil 1 ist mit der Dampfaustrittsöffnung 4 an einen Frischdampfstutzen der Dampfturbine anzubauen, wobei an die Dampfeintrittsöffnung 3 eine Frischdampfleitung einer Frischdampfschiene anzuschließen ist. Durch die Dampfeintrittsöffnung 3 tritt Frischdampf in das Regel-Schnellschluss-Ventil 1 ein und wird durch die Dampfaustrittsöffnung 4 an die Dampfturbine abgegeben, so dass sich in dem Regel-Schnellschluss-Ventil 1 eine Dampfströmung 5 ausbildet. In Fig. 1 bis 4 ist die Dampfeintrittsöffnung 3 in dem Ventilgehäuse 2 waagerecht verlaufend angeordnet, so dass die Dampfströmung 5 im Bereich der Dampfeintrittsöffnung 3 horizontal verläuft. Beim Durchströmen des Regel-Schnellschluss-Ventils 1 passiert der Dampf einen zylindrischen Gehäuseabschnitt 7 und danach einen konischen Gehäuseabschnitt 6 und tritt dann durch die Dampfaustrittsöffnung 4 aus dem Ventilgehäuse 2 aus. In Fig. 1 bis 4 ist die Dampfaustrittsöffnung 4 in dem Ventilgehäuse 2 senkrecht nach unten verlaufend angeordnet, so dass die Dampfströmung 5 im Bereich der Dampfaustrittsöffnung 4 vertikal verläuft.

In dem Ventilgehäuse 2 ist ein Regelventilkegel 8 angeordnet, der einen der Dampfaustrittsöffnung 4 zugewandten Regelventilkegelmantel 10 aufweist, mit dem der Regelventilkegel 8 an dem konischen Gehäuseabschnitt 6 einen Regelventilsitz 9 ausbildet. Der Regelventilkegel 8 ist in dem Ventilgehäuse 2 so angeordnet, dass in Fig. 1 bis 4 die Mittelachse des Regelventilkegels 8 senkrecht verläuft. Dem Regelventilmantel 10 abgewandt weist der Regelventilkegel 8 eine Regelventilkegelrückseite 11 auf. Ferner weist der Regelventilkegel 8 eine Regelventilspindel 12 auf, die auf der Mittelachse des Regelventilkegels 8 liegend und mit ihrer Stirnseite mittig an der Regelventilkegelrückseite 11 befestigt ist. Der Regelventilkegelrückseite 11 zugewandt ist ein Gehäusewandabschnitt 17 des Ventilgehäuses 2 vorgesehen, der im Wesentlichen parallel zu der Regelventilkegelrückseite 11 verläuft. In dem Gehäusewandabschnitt 17 ist ein Spindelführungsloch 18 vorgesehen, durch das die Regelventilspindel 12 sich erstreckt und entlang der Mittelachse des Regelventilkegels 8 verschiebbar geführt ist. Außerhalb des Ventilgehäuses 2 an dem Gehäusewandabschnitt 17 ist an der Regelventilspindel 12 ein Tellerfederpaket 19 zum Betätigen der Regelventilspindel 12 angebaut.

Der Regelventilkegel 8 ist in dem Ventilgehäuse 2 entlang seiner Mittelachse längsverschiebbar angeordnet, wobei der Regelventilkegel 8 durch Aufbringen einer Verschiebekraft auf die Regelventilspindel 12 beispielsweise von außerhalb des Ventilgehäuses 2 verschoben werden kann. Dadurch kann der Regelventilkegelmantel 10 an dem konischen Gehäuseabschnitt 8 angelegt oder abgehoben angeordnet sein, wodurch bei einer entsprechenden Betätigung des Regelventilkegels 8 die Funktion eines Regelventils mit dem Regel-Schnellschluss-Ventil 1 ausgeübt werden kann.

Ferner weist das Regel-Schnellschluss-Ventil 1 einen Schnellschlussventilkolben 13 auf, der in dem zylindrischen Gehäuseabschnitt 7 der Regelventilkegelrückseite 11 zugewandt angeordnet ist. An dem Schnellschlussventilkolben 13 sind zwei Schnellschlussventilspindeln 14 angebracht, die sich parallel zu der Mittelachse des Regelventilkegels 8 erstrecken und durch jeweils ein weiteres Spindelführungsloch 18 in dem Gehäusewandabschnitt 17 längsverschiebbar gelagert sind. An dem Außenrand des Schnellschlussventilkolbens 13 ist ein Kolbenring 16 angebracht, der zwischen dem Schnellschlussventilkolben 13 und dem zylindrischen Gehäuseabschnitt 7 vorgesehen ist und in jeder Position des Schnellschlussventilkolbens 13 dampfdicht abdichtet. Der Schnellschlussventilkolben 13 ist parallel zu der Mittelachse des Regelventilkegels 8 und via den Schnellschlussventilspindeln 14 betätigbar angeordnet, wobei beim Verschieben des Schnellschlussventilkolbens 13 der Kolbenring 16 an dem zylindrischen Gehäuseabschnitt 7 gleitet. An seinem Außenrand weist der Schnellschlussventilkolben 13 einen umlaufenden Vorsprung 20 auf, der vertikal in Richtung zu der Regelventilkegelrückseite 11 sich erstreckt und an der Regelventilkegelrückseite 11 unter Ausbilden eines Schnellschlussventilsitzes 21 dampfdicht anlegbar ist. Ferner weist der Schnellschlussventilkolben 13 zwei Durchlassöffnungen 15 auf, durch die Dampf von der Seite des Schnellschlussventilkolbens 13, die der Regelventilkegelrückseite 11 abgewandt ist, zu der Seite des Schnellschlussventilkolbens 13, die der Regelventilkegelrückseite 11 zugewandt ist, strömen kann.

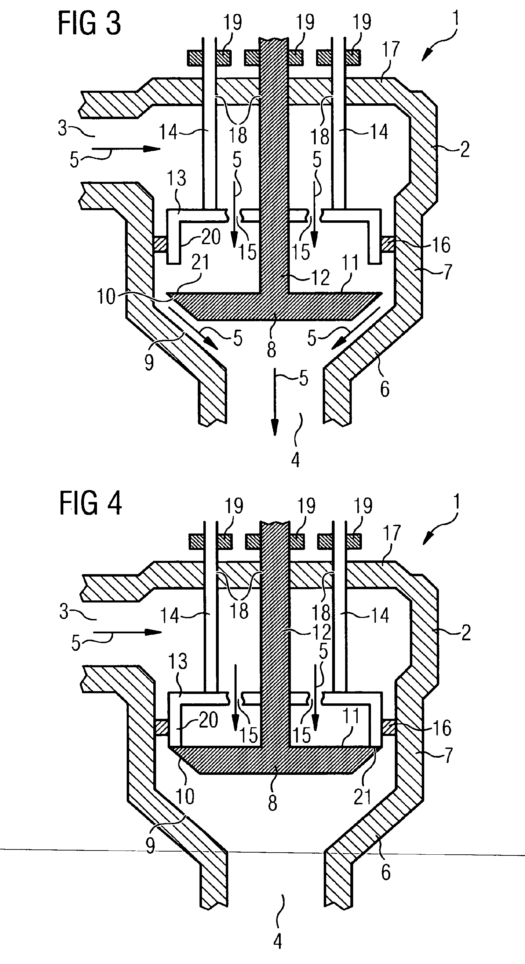

In Fig. 1 und 2 ist in dem Regel-Schnellschluss-Ventil 1 der Regelventilkegel 8 mit seinem Regelventilkegelmantel 10 an dem konischen Gehäuseabschnitt 6 angelegt, so dass der Regelventilsitz 9 für Dampf unpassierbar ist. In Fig. 3 ist der Regelventilkegel 8 von dem konischen Gehäuseabschnitt 6 abgehoben, so dass an dem Regelventilsitz 9 Dampf passierbar ist, wobei mit dem Abstand zwischen dem Regelventilkegel 8 und dem konischen Gehäuseabschnitt 6 der passierende Dampfmassenstrom definiert ist. In Fig. 4 ist der Regelventilkegel 8 weiter von dem konischen Gehäuseabschnitt 6 abgehoben, so dass an dem Regelventilsitz 9 ein höherer Dampfmassenstrom passierbar ist, verglichen mit dem Dampfmassenstrom, der in dem Regel-Schnellschluss-Ventil 1 gemäß Fig. 3 passierbar ist.

In Fig. 2 und 3 ist der Schnellschlussventilkolben 13 von dem Regelventilkegel 8 abgehoben angeordnet, wobei mit dem Kolbenring 16 der Schnellschlussventilkolben 13 an dem zylindrischen Gehäuseabschnitt 7 dampfdicht anliegt. Durch die Durchlassöffnungen 15 ist Dampf in einen Zwischenraum zwischen dem Schnellschlussventilkolben 13 und dem Regelventilkegel 8 strömbar. Dadurch, dass der Vorsprung 20 in Fig. 2 und 3 nicht an der Regelventilkegelrückseite 11 anliegt, ist der Schnellschlussventilsitz 21 für Dampf passierbar. Jedoch liegt in Fig. 2 der Regelventilkegel 8 mit seinem Regelventilkegelmantel 10 an dem konischen Gehäuseabschnitt 6 an, so dass der Regelventilsitz 9 geschlossen ist. Dadurch kann die Dampfströmung 5 zwar den Schlussschlussventilkolben 13 durch die Durchlassöffnungen 15 passieren und gelangt via den Schnellschlussventilsitz 21 an den Regelventilsitz 9, von dem gemäß Fig. 2 das Regel-Schnellschluss-Ventil 1 geschlossen ist.

Gemäß Fig. 1 und 4 liegt der Schnellschlussventilkolben 13 mit seinem Vorsprung 20 an der Regelventilkegelrückseite 11 an, so dass der Schnellschlussventilsitz 21 für Dampf unpassierbar ist. Zwar kann in Fig. 1 und 4 die Dampfströmung 5 durch die Durchlassöffnung 15 in den Zwischenraum zwischen dem Schnellschlussventilkolben 13 und dem Regelventilkegel 8 gelangen, das Weiterströmen über den Schnellschlussventilsitz 21 zu der Dampfaustrittsöffnung 4 hin ist jedoch unterbunden. Dadurch ist die Schnellschlussfunktion des Regel-Schnellschluss-Ventils 1 erzielt.

Im Regelbetrieb des Regel-Schnellschluss-Ventils 1 ist der Schnellschlussventilkolben 13 von dem Regelventilkegel 8 abgehoben angeordnet, so dass an den Regelventilsitz 9 durch die Durchlassöffnungen 15 via den Schnellschlussventilsitz 21 die Dampfströmung 5 gelangen kann. Mit der Position des Regelventilkegels 8 bezogen auf den konischen Gehäuseabschnitt 6 ist der Massenstrom der Dampfströmung 5 an dem Regelventilsitz 9 regelbar. Wird das Regel-Schnellschluss-Ventil 1 in Schnellschluss gebracht, so ist via die Schnellschlussventilspindeln 14 der Schnellschlussventilkolben 13 mit seinem Vorsprung 20 an die Regelventilkegelrückseite 11 angelegt, so dass der Schnellschlussventilsitz 21 für die Dampfströmung 5 unpassierbar ist. Dadurch ist ein Durchströmen von der Dampfeintrittsöffnung 3 zu der Dampfaustrittsöffnung 4 unterbunden, unabhängig davon, in welcher Regelposition der Regelventilkegel 8 sich befindet. Somit ist ein schnelles Schließen des Regel-Schnellschluss-Ventils 1 erzielt, ohne dass die Position des Regelventilkegels 8 verändert zu werden braucht.

## Patentansprüche

1. Regel-Schnellschluss-Ventil für eine Dampfturbine, mit einem Ventilgehäuse (2) und einem Regelventilkegel (8), der in dem Ventilgehäuse (2) entlang seiner Mittelachse verschiebbar angeordnet ist,
wodurch der Regelventilkegel (8) in eine Offenstellung, in der der Regelventilkegel (8) mit seinem Regelventilkegelmantel (10) von dem Ventilgehäuse (2) abgehoben ist, und in eine Geschlossenstellung bringbar ist, in der der Regelventilkegel (8) mit seinem Regelventilkegelmantel (10) an dem Ventilgehäuse (2) anliegt, sowie einem Schnellschlussventilkolben (13), der der dem Regelventilkegelmantel (8) abgewandten Regelventilkegelrückseite (11) zugewandt in dem Ventilgehäuse (2) angeordnet ist und an seinem Außenumfangsrand (20) an dem Ventilgehäuse (2) stets dampfdicht anliegt sowie eine Durchlassöffnung (15) aufweist, durch die Dampf (5) von der dem Regelventilkegel (8) abgewandten Seite des Schnellschlussventilkolbens (13) zu der dem Regelventilkegel (8) zugewandten Seite des Schnellschlussventilkolbens (13) passierbar ist,
wobei der Schnellschlussventilkolben (13) in dem Ventilgehäuse (2) parallel zur Mittelachse des Regelventilkegels (8) verschiebbar angeordnet; **dadurch gekennzeichnet, dass** der Schnellschlussventilkolben (13) an die Regelventilkegelrückseite (11) anlegbar ist,
wodurch die Durchlassöffnung (15) für den Dampf (5) unpassierbar ist.

2. Regel-Schnellschluss-Ventil gemäß Anspruch 1,
wobei das Ventilgehäuse (2) eine Dampfeintrittsöffnung (3), die dem Schnellschlussventilkolben (13) zugewandt angeordnet ist, und eine Dampfaustrittsöffnung (4) aufweist, die dem Regelventilkegel (8) zugewandt angeordnet ist.

3. Regel-Schnellschluss-Ventil gemäß Anspruch 1 oder 2,
wobei das Ventilgehäuse (2) einen konischen Gehäuseabschnitt (6), mit dem der Regelventilkegel (8) mit seinem Regelventilkegelmantel (10) einen Regelventilsitz (9) bildet, und einen zylindrischen Gehäuseabschnitt (7) aufweist, von dem der Schnellschlussventilkolben (13) geführt ist.

4. Regel-Schnellschluss-Ventil gemäß Anspruch 3,
wobei der Schnellschlussventilkolben (13) einen Kolbenring (16) aufweist, der an dem zylindrischen Gehäuseabschnitt (7) gleitbar anliegt.

5. Regel-Schnellschluss-Ventil gemäß einem der Ansprüche 1 bis 4,
wobei der Schnellschlussventilkolben (13) an seinem Außenrand einen der Regelventilkegelrückseite (11) zugewandten, umlaufenden Vorsprung (20) aufweist, mit dem der Schnellschlussventilkolben (13) an die Regelventilkegelrückseite (11) anlegbar ist, so dass die Durchlassöffnung (15) für den Dampf (5) unpassierbar ist.

6. Regel-Schnellschluss-Ventil gemäß einem der Ansprüche 1 bis 5,
wobei die Mittelachse des Regelventilkegels (8) und die Mittelachse des Schnellschlussventilkolbens (13) zusammenfallen.

7. Regel-Schnellschluss-Ventil gemäß Anspruch 6,
wobei der Regelventilkegel (8) eine Regelventilspindel (12) und der Schnellschlussventilkolben (13) mindestens eine Schnellschlussventilspindel (14) aufweisen,
wobei die Spindeln (12, 14) parallel zu den Mittelachsen längsverschiebbar sind.

8. Regel-Schnellschluss-Ventil gemäß Anspruch 7,
wobei die Regelventilspindel (12) an der Regelventilkegelrückseite (11) angebracht ist und durch den Schnellschlussventilkolben (13) hindurch geführt angeordnet ist.

9. Regel-Schnellschluss-Ventil gemäß Anspruch 8,
wobei das Ventilgehäuse (2) einen Gehäusewandabschnitt (17) aufweist, der für die Regelventilspindel (12) und für die Schnellschlussventilspindel (14) jeweils ein Spindelführungsloch (18) aufweist, durch die das entsprechende Spindel (12, 14) geführt ist.

10. Regel-Schnellschluss-Ventil gemäß Anspruch 9,
wobei jede Spindel (12, 14) außerhalb des Gehäusewandabschnitts (17) mit einem Tellerfederpaket (19) zur Betätigung der jeweiligen Spindel (12, 14) versehen ist.

## Claims

1. Quick acting control valve for a steam turbine, said quick acting control valve having a valve box (2) and a control valve cone (8), which is arranged in the valve box (2) so as to be displaceable along its center axis, as a result of which the control valve cone (8) can be moved into an open position in which the control valve cone (8), with its control valve cone surface (10), is lifted off the valve box (2), and into a closed position in which the control valve cone (8) abuts against the valve box (2) with its control valve cone surface (10), and having a quick acting valve piston (13), which is arranged in the valve box (2) facing the back (11) of the control valve cone remote from the control valve cone surface (10) and, on its outer peripheral edge (20), always abuts against the valve box (2) in a steam-tight manner and has a passage (15), through which steam (5) can pass from the side of the quick acting valve piston (13) remote from the control valve cone (8) to the side of the quick acting valve piston (13) facing the control valve cone (8), wherein the quick acting valve piston (13) is arranged in the valve box (2) so as to be displaceable in parallel with the center axis of the control valve cone (8); **characterized in that** the quick acting valve piston (13) is able to be placed against the back (11) of the control valve cone, as a result of which the passage (15) is impassable for the steam (5).

2. Quick acting control valve according to Claim 1, wherein the valve box (2) has a steam inlet opening (3), which is arranged facing the quick acting valve piston (13), and a steam outlet opening (4) which is arranged facing the control valve cone (8).

3. Quick acting control valve according to Claim 1 or 2, wherein the valve box (2) has a conical box section (6), with which the control valve cone (8) with its control valve cone surface (10) forms a control valve seat (9), and a cylindrical box section (7) by which the quick acting valve piston (13) is guided.

4. Quick acting control valve according to Claim 3, wherein the quick acting valve piston (13) has a piston ring (16), which abuts against the cylindrical box section (7) in a sliding manner.

5. Quick acting control valve according to one of Claims 1 to 4, wherein the quick acting valve piston (13), on its outer peripheral edge, has a circumferential projection (20) which faces the back (11) of the control valve cone and by way of which the quick acting valve piston (13) can be placed against the back (11) of the control valve cone such that the passage (15) is impassable for the steam (5).

6. Quick acting control valve according to one of Claims 1 to 5, wherein the center axis of the control valve cone (8) and the center axis of the quick acting valve piston (13) coincide.

7. Quick acting control valve according to Claim 6, wherein the control valve cone (8) has a control valve spindle (12) and the quick acting valve piston (13) has at least one quick acting valve spindle (14), wherein the spindles (12, 14) are longitudinally displaceable in parallel with the center axes.

8. Quick acting control valve according to Claim 7, wherein the control valve spindle (12) is mounted on the back (11) of the control valve cone and is arranged so as to be guided through the quick acting valve piston (13).

9. Quick acting control valve according to Claim 8, wherein the valve box (2) has a box wall section (17) which has a spindle guide hole (18) in each case for the control valve spindle (12) and for the quick acting valve spindle (14), the corresponding spindle (12, 14) being guided through said spindle guide holes.

10. Quick acting control valve according to Claim 9, wherein each spindle (12, 14) is provided with a laminated cup spring (19) outside the box wall section (17) for actuating the respective spindle (12, 14).

## Revendications

1. Vanne de fermeture instantanée et de régulation pour une turbine à vapeur, comprenant un corps (2 ) de vanne et un cône ( 8 ) de réglage de vanne, qui est monté coulissant dans le corps ( 2 ) de vanne le long de son axe médian,
de sorte que le cône ( 8 ) de réglage de vanne peut être mis dans une position d'ouverture, dans laquelle la surface latérale ( 10 ) du cône ( 8 ) de réglage de vanne est soulevée du corps ( 2 ) de vanne, et dans une position fermée, dans laquelle le cône ( 8 ) de réglage de vanne s'applique par sa surface ( 10 ) latérale au corps ( 2 ) de vanne, ainsi qu'un piston ( 13 ) de vanne de fermeture instantanée, qui est monté dans le corps ( 2 ) de vanne en étant tourné vers le côté ( 11 ) arrière du cône ( 8 ) de réglage de vanne éloigné de la surface latérale du cône ( 8 ) de réglage de vanne et qui, sur son bord ( 20 ) périphérique extérieur, s'applique toujours d'une manière étanche à la vapeur au corps ( 2 ) de vanne, et a une ouverture ( 15 ) de passage, par laquelle la vapeur peut passer du côté, éloigné du cône ( 8 ) de réglage de vanne, du piston ( 13 ) de vanne à fermeture instantanée au côté, tourné vers le cône ( 8 ) de réglage de vanne, du piston ( 13 ) de vanne à fermeture instantanée,
dans laquelle le piston ( 13 ) de vanne à fermeture instantanée est monté coulissant dans le corps ( 2 ) de vanne parallèlement à l'axe médian du cône ( 8 ) de réglage de vanne,
**caractérisée en ce que** le piston ( 13 ) de vanne à fermeture instantanée peut s'appliquer au côté ( 11 ) arrière du cône de réglage de vanne,
de manière à ce que la vapeur ( 5 ) ne puisse pas passer dans l'ouverture ( 15 ) de passage.

2. Vanne de fermeture instantanée et de régulation suivant la revendication 1,
dans laquelle le corps ( 2 ) de vanne a une ouverture ( 3 ) d'entrée de la vapeur, qui est tournée vers le piston ( 13 ) de vanne à fermeture instantanée, et une ouverture ( 4 ) de sortie de la vapeur.

3. Vanne de fermeture instantanée et de régulation suivant la revendication 1 ou 2,
dans laquelle le corps ( 2 ) de vanne a une partie ( 6 ) conique, par laquelle le cône ( 8 ) de réglage de vanne forme, par sa surface latérale ( 10 ) de cône de réglage de vanne, un siège ( 9 ) de réglage de vanne, et une partie ( 7 ) de corps cylindrique, par laquelle le piston ( 13 ) de vanne de fermeture instantanée est guidé.

4. Vanne de fermeture instantanée et de régulation suivant la revendication 3,
dans laquelle le piston ( 13 ) de vanne de fermeture instantanée a un anneau ( 16 ) de piston, qui s'applique de manière à pouvoir glisser sur la partie ( 7 ) cylindrique du corps.

5. Vanne de fermeture instantanée et de régulation suivant l'une des revendications 1 à 4,
dans laquelle le piston ( 13 ) de vanne de fermeture instantanée a sur son bord extérieur une saillie ( 20 ) faisant le tour, tournée vers le côté ( 11 ) arrière du cône de réglage de vanne et par laquelle le piston ( 13 ) de vanne de fermeture instantanée peut s'appliquer au côté ( 11 ) arrière du cône de réglage de vanne, de manière à ce que la vapeur ( 15 ) ne puisse pas passer par l'ouverture ( 15 ) de passage.

6. Vanne de fermeture instantanée et de régulation suivant l'une des revendications 1 à 5,
dans laquelle l'axe médian du cône ( 8 ) de réglage de vanne et l'axe médian du piston ( 13 ) de vanne de fermeture instantanée coïncident.

7. Vanne de fermeture instantanée et de régulation suivant la revendication 6,
dans laquelle le cône ( 8 ) de réglage de vanne a une broche ( 12 ) de réglage de vanne et le piston ( 13 ) de vanne de fermeture instantanée a au moins une broche ( 14 ) de vanne de fermeture instantanée,
les broches ( 12, 14 ) pouvant coulisser longitudinalement parallèlement aux axes médians.

8. Vanne de fermeture instantanée et de régulation suivant la revendication 7,
la broche ( 12 ) de réglage de vanne s'applique au côté ( 11 ) arrière du cône de réglage de vanne et est guidée dans le piston ( 13 ) de vanne de fermeture instantanée.

9. Vanne de fermeture instantanée et de régulation suivant la revendication 8,
le corps ( 2 ) de vanne a une partie ( 17 ) de paroi, qui a, pour la broche ( 12 ) de réglage de vanne et pour la broche ( 14 ) de vanne de fermeture instantanée, respectivement un trou ( 18 ) de guidage de broche, dans lequel la broche ( 12, 14 ) correspondante est guidée.

10. Vanne de fermeture instantanée et de régulation suivant la revendication 9,
dans laquelle chaque broche ( 12, 14 ) est pourvue à l'extérieur de la partie ( 17 ) de paroi du corps d'un paquet ( 19 ) de ressorts à disque pour l'actionnement de la broche ( 12, 14 ) respective.
